# EUROPEAN PATENT SPECIFICATION

(11) **EP 2 806 748 B1**
(45) Date of publication and mention of the grant of the patent: **02.12.2015**
(21) Application number: 13700577.3
(22) Date of filing: 18.01.2013
(51) Int. Cl.: A23F 3/14, A23F 3/16, A23F 3/18

(54) **LIQUID TEA COMPOSITION**
FLÜSSIGE TEEZUSAMMENSETZUNG
COMPOSITION DE THÉ LIQUIDE

(30) Priority: 27.01.2012 EP 12152821
(43) Date of publication of application: 03.12.2014
(73) Proprietor: Unilever PLC, London, Greater London EC4Y 0DY (GB); Unilever N.V., 3013 AL Rotterdam (NL)
(72) Inventor: SMITH, Alistair, David, Bedford Bedfordshire MK44 1LQ (GB); WIX, Loyd, Bedford Bedfordshire MK44 1LQ (GB); ZHANG, Shi, Qiu, Englewood Cliffs, New Jersey 07632 (US)
(74) Representative: Askew, Sarah Elizabeth
(86) International application number: PCT/EP2013/050906
(87) International publication number: WO 2013/110550

(56) References cited:
- EP-A1- 2 082 651
- WO-A1-2004/037015
- WO-A2-2009/059927

## Description

### Technical field of the invention

The present invention relates to liquid compositions for diluting to prepare beverages. In particular the invention relates to liquid compositions which comprise expressed tea juice.

### Background to the invention

Beverages based on the tea plant *(Camellia sinensis)* have been popular throughout the world for hundreds of years. Traditionally such beverages are produced by infusing tea leaves in hot water and separating the aqueous plant extract from the remaining insoluble plant material. Today such beverages can be prepared by more convenient methods which dispense with the need for manipulation of insoluble plant material by the end-user or consumer. In particular, the beverages can be prepared from instant powders, granules or liquid concentrates which can be conveniently dissolved and/or diluted in water.

Juice expressed from tea leaves (rather than extracted from leaves with a solvent) has been found to produce beverages having organoleptic properties different from those produced from conventional liquid tea concentrates. WO 2009/059927 discloses a process for manufacturing one such tea juice wherein the process comprises the steps of providing fresh tea leaves comprising catechins; macerating the fresh tea leaves thereby to produce dhool; fermenting the dhool for a fermentation time sufficient to reduce the content of catechins in the dhool to less than 50% of the content of catechins in the fresh tea leaves prior to maceration on a dry weight basis; and then expressing juice from the fermented dhool thereby to produce leaf residue and tea juice, wherein the amount of expressed juice is at least 50 ml per kg of the fresh tea leaves.

We have now identified a problem with tea juice produced by expression from tea leaves. While tea juice produced by this process delivers a robust, flavoursome beverage on dilution, the appearance of the tea juice does not match consumer expectations. In particular, while the tea juice may be initially clear, it becomes quite dark and hazy after storage, and contains visible sediment. Therefore, it is desirable to provide tea juice which has an improved appearance after storage, whilst still using a simple process.

### Brief description of the invention

We have now found that the appearance of tea juice can be maintained through storage by adding exogenous biopolymer. In particular, after prolonged storage, the tea juice is lighter in colour, less hazy and contains less visible sediment. Thus in a first aspect, the present invention provides a liquid composition comprising expressed tea juice and from 5 to 30wt % of exogenous biopolymer.

In a second aspect, the invention provides a beverage obtained and/or obtainable by diluting the liquid composition of the first aspect of the invention with an aqueous liquid.

In a third aspect, the invention provides a process for manufacturing a liquid composition according to the first aspect of the invention, the process comprising the steps of:
(a) expressing tea juice from fresh tea leaves; and
(b) combining the tea juice with an exogenous biopolymer.

### Detailed description of the invention

As used herein the term "comprising" encompasses the terms "consisting essentially of' and "consisting of". All percentages and ratios contained herein are by weight of the final composition unless otherwise indicated. It should be noted that in specifying any range of values or amount, any particular upper value or amount can be associated with any particular lower value or amount.

The liquid composition of the present invention comprises expressed tea juice. As used herein the term "tea" means material from *Camellia sinensis* var. *sinensis* and/or *Camellia sinensis* var. *assamica.* "Fresh tea leaves" refers to tea leaves and/or stem that have never been dried to a water content of less than 30% by weight, and usually have a water content in the range 60 to 90%. "Tea juice" refers to juice squeezed out from fresh tea leaves using physical force, as opposed to extracts produced by extraction of tea solids with the use of a solvent. Thus the term "expressing" encompasses such means as squeezing, pressing, wringing, spinning and extruding. Expression can be achieved in any convenient way so long as it allows for separation of the tea juice from the leaf residue. The machinery used to express the juice may, for example, be a hydraulic press, a pneumatic press, a screw press, a belt press, an extruder or a combination thereof.

The juice may be obtained in a single pressing or in multiple pressings. Preferably the juice is obtained from a single pressing as this allows for a simple and rapid process. In order to minimise degradation of the tea compounds, it is preferred that expression is performed at ambient temperature, for example from 5 to 40°C, more preferably 10 to 30°C. The time and pressure used in the expression step can be varied. Typically, however, the pressures applied to express the juice will range from 0.5 MPa (73 psi) to 10 MPa (1450 psi). The time over which the pressure is applied will typically range from 1 s to 1 hour, more preferably from 10 s to 20 minutes and most preferably from 30 s to 5 minutes.

It is possible that a small amount of solvent (e.g. water) is added to the fresh tea leaves during the expression step (a). However, in order to prevent significant extraction of tea solids by the solvent, the moisture content of the fresh leaves during expression is preferably between 30 and 90% by weight, more preferably between 60 and 90%. Preferably the amount of juice expressed is at least 50 ml per kg of fresh leaves, more preferably from 100 to 800 ml per kg of fresh tea leaves and most preferably from 200 to 600 ml per kg of fresh leaves. The expression step produces leaf residue in addition to the juice and the juice is separated from the leaf residue prior to being included in the liquid composition of the present invention.

The tea juice is preferably centrifuged after expression in order to remove insoluble tea solids, and may also be filtered.

The tea juice may be black tea juice, green tea juice or a combination thereof. Green tea is substantially unfermented tea. Black tea is substantially fermented tea. Fermentation is the oxidative and hydrolytic process that tea undergoes when certain endogenous substrates and enzymes are brought together, e.g. by mechanical disruption of the cells by maceration of the leaves. During this process colourless catechins in the leaves are converted to a complex mixture of yellow and orange to dark-brown polyphenolic substances.

The liquid composition is suitable for dilution with an aqueous liquid to provide a beverage. As used herein the term "beverage" refers to a substantially aqueous drinkable composition suitable for human consumption. Preferably the beverage comprises at least 85% water by weight of the beverage, more preferably at least 90% and most preferably from 95 to 99.9%.

Thus the liquid composition preferably comprises a high concentration of tea solids. In particular it is preferable that the liquid composition comprises tea solids in an amount of at least 4% by weight of the composition, more preferably at least 5% and most preferably at least 6%. Preferably the amount of tea solids is not too high otherwise stability may be adversely affected. Thus it is preferred that the liquid composition comprises less than 20% tea solids by weight of the composition, more preferably less than 15% and most preferably less than 10%.

Where the composition comprises black tea juice, the composition preferably comprises theaflavins and the weight ratio of theaflavin (TF1) to theaflavin digallate (TF4) is at least 2.0, more preferably at least 3.0, more preferably still at least 3.2 and most preferably from 3.5 to 5.0. Additionally or alternatively the amount of TF1 in the total theaflavins in the liquid composition is preferably at least 40% by weight, more preferably at least 42% by weight and most preferably from 45 to 60%. Suitable methods for determining theaflavin contents can be found, for example in WO 2009/059927.

Where the composition comprises green tea juice, the composition preferably comprises catechins and has a weight ratio of non-gallated catechins to gallated catechins of greater than 1.4:1, more preferably greater than 1.6:1, more preferably still greater than 1.8:1 and most preferably from 3:1 to 20:1. Methods of measuring gallated and non-gallated catechin contents can be found, for example in WO 2010/037768.

In order to preserve the specific composition of the tea juice (especially in terms of gallated polyphenols and/or caffeine) and/or the unique organoleptic properties of the tea juice, it is preferred that at least 50% by weight of the tea solids are provided by the tea juice, more preferably at least 75% and most preferably from 90 to 100%.

The composition comprises from 5 to 30% by weight of exogenous biopolymer, more preferably from 8 to 25% and most preferably from 10 to 20%. As used herein the term "exogenous biopolymer" means any biopolymer that is not derived from tea, and includes polysaccharides, oliosaccharides, gums, derivatives thereof and/or combinations thereof.

We have found that adding exogenous biopolymer gives in a significant improvement in appearance of the composition after storage; in particular the liquid is lighter in colour with less haze and less sediment. The lightness (L) and Haze values are measured with a Hunterlab Ultrascan XE colourimeter, using a CIELab Colour System, Illuminant: C, Observer Angle: 2° and Cell Size: 1 cm. Preferably the composition has a lightness (L) value which is at least twice that of an identical composition without the exogenous biopolymer, more preferably at least three or four times. Preferably also the composition has a Haze value which is at most 75% of that of an identical composition without the exogenous biopolymer, more preferably at most 50% or 33%. Without wishing to be limited by theory, it is believed that the exogenous biopolymer stops or substantially slows down sedimentation of solids in the tea juice, thus maintaining its good appearance.

In order to avoid introducing unwanted sweetness, it is preferred that the exogenous biopolymer has a low relative sweetness. The relative sweetness (R) is the sweetness of a substance relative to the sweetness of an equivalent weight of sucrose (i.e. sucrose has a relative sweetness of 1). This is a common means of expressing sweetness in the food industry. It is preferred that the relative sweetness of the exogenous biopolymer is from 0.01 to 0.50, more preferably from 0.02 to 0.35 and most preferably from 0.05 to 0.20.

Particularly useful exogenous biopolymers which have good solubility and/or desirable taste profiles are glucose polymers. Glucose polymers are complex multi-component digestible saccharides that are derived from starch. Preferred examples of glucose polymers include glucose syrups (also known as corn syrups), maltodextrins, and/or mixtures thereof. Glucose polymers are typically supplied as liquid syrups or spray dried powders. For the avoidance of doubt, when the exogenous biopolymer is provided in the form of a syrup or the like, it is only the solids content which is counted as added exogenous biopolymer, and not the water with which it is mixed. For example, adding liquid glucose syrup having a solids content of 75% in an amount of 20% by weight (of the final liquid composition) results in a composition containing 15% by weight of glucose syrup solids.

Glucose polymers are commonly classified according to their dextrose equivalent (DE), which is a measure of the reducing sugar content. The standard method for determining DE is the Lane-Eynon constant titre method (ISO 5377:1981). DE gives an indication of the average degree of polymerisation for glucose polymers and is, in effect, a determination of the number average molecular weight of a glucose polymer.

In order to avoid introducing unwanted sweetness, it is preferred that the glucose polymer has a low dextrose equivalent. Thus it is preferred that the composition comprises glucose polymer of no more than 50 DE, more preferably no more than 40 DE. In order to facilitate formulation of the liquid composition it is preferred that the glucose polymer is readily soluble. Thus it is preferred that the liquid composition comprises glucose polymer of at least 5 DE, more preferably at least 10 DE, and most preferably at least 20 DE. In a particularly preferred embodiment the glucose polymer has a DE of 20 to 40.

Despite having a high tea solids content (compared with conventional tea extracts), tea juice has an unexpectedly low viscosity. Thus, including biopolymer in the liquid composition has a further advantage in that it increases the viscosity of the composition. In the absence of the biopolymer, the fact that the tea juice has a low viscosity may lead to an erroneous perception by consumers that the tea juice is weak, and will not deliver a robust, flavoursome beverage on dilution. Thus it is preferred that the viscosity of the composition (as determined at a temperature of 20°C and a shear rate of 100 s⁻¹) is at least 2.5 mPa·s, preferably at least 3.0 mPa·s, more preferably at least 3.5 mPa·s. In certain embodiments it is possible that the viscosity of the composition can be sufficiently high such that the composition has the appearance of a very thick liquid or even a gel (for example, 1 Pa·s, 10 Pa·s or even 50 Pa·s). However, it is preferred that the viscosity of the composition is not too high otherwise its handling and/or portionability can be adversely affected. For example, if the liquid composition is packaged, it is desirable that the viscosity of the composition is such that the quantity of the composition that remains behind as a residue on the packaging material is minimised. Thus it-is preferred that the viscosity of the composition is no more than 80 mPa·s, more preferably no more than 40 mPa·s, still more preferably no more than 20 mPa·s and most preferably no more than 10 mPa·s. The viscosity is measured using a TA Instruments AR2000 rheometer with a 60 mm diameter, 2° acrylic cone-and-plate configuration. Rheology Advantage software (TA Instruments) is used to control the rheometer, collect experimental data and calculate the sample viscosity. The temperature of the sample is controlled at 20°C using a Peltier plate, and the shear stress (mPa) is measured as the shear rate is stepped from 1 to 200 reciprocal seconds (s⁻¹) while recording 15 points per decade. The viscosity of each sample is measured in duplicate.

Including biopolymer in the liquid composition has another advantage in that it helps to stabilise the liquid composition. The total solids content of the liquid composition should not be too high otherwise stability may be adversely affected. Thus the total solids content of the liquid composition is preferably from 10 to 50% by weight, more preferably from 15 to 40% and most preferably from 20 to 30%. From a standpoint of microbial stability, it is preferred that the liquid composition is packaged, i.e. contained within a sealed package. In particular the package is sealed so that it is impermeable to microbiological contaminants, by which is meant that the packaged liquid composition can be stored for at least 6 months at a temperature of 20°C without the amount of spore-forming bacteria *(Bacillus* and *Clostridia spp)* in the liquid composition increasing above 100 colony forming units (cfu) / ml. Suitable packages include bottles, cans, cartons, pouches and sachets. In a particularly preferred embodiment, the liquid composition is packaged in unit doses, wherein each unit dose is suitable for dilution to make a palatable tea beverage.

In a preferred embodiment the package is in the form of a sachet having a hollow tubular body enclosed at one end by a first transverse seal and at another end by a second transverse seal. For example the package may be a pillow-shaped or tetrahedral-shaped sachet. For pillow-shaped sachets the transverse seals are substantially parallel to each other, whilst for tetrahedral-shaped sachets the transverse seals are substantially perpendicular to each other. Most preferably the package is tetrahedral shaped as this allows for easier handling of the package. Sachets are typically formed from flexible packaging material. The most preferred packaging material is a plastic-foil laminate material, especially material comprising a metal (such as aluminium) foil layer sandwiched between two or more plastic (such as polyethylene terephthalate, polyethylene, polypropylene or combinations thereof) layers.

The present invention provides beverages obtained and/or obtainable by diluting the tea juice with an aqueous liquid, preferably water. Since the liquid composition is typically relatively rich in tea solids, it can usually be diluted many-fold whilst still imparting tea flavour to the resulting beverage. Thus the liquid composition is preferably diluted by a factor of 5 to 50 by weight, more preferably by a factor of 10 to 40 and most preferably by a factor of 15 to 35.

The liquid composition of the present invention may be manufactured by any suitable means but is preferably manufactured by a process comprising the steps of: (a) expressing tea juice from fresh tea leaves; and (b) combining the tea juice with exogenous biopolymer. The process preferably comprises an additional step of: (c) packaging the liquid composition in a sealed container. The process preferably also comprises a step of centrifuging and /or filtering the tea juice before step (b)

From the point of view of food hygiene it is preferred that the liquid composition and/or the package is subjected to a sanitisation step such as pasteurisation or UHT treatment. For example the liquid composition may be sanitised and the sanitised composition dosed into a previously-sanitised open chamber under sterile conditions. Additionally or alternatively the formed package may be subjected to a santisation step, for example by in-pack pasteurisation or retorting.

The present invention will now be illustrated by reference to the following examples.

### Examples

### Example 1

Fresh tea leaves of *Camellia sinensis* var. *assamica* were withered to 76% moisture content. The withered tea leaves were coarsely cut, before being fed into a rotorvane and then through a CTC (cut, tear, curl) machine with the rollers set at eight teeth per inch (TPI). The cut leaf was fermented for a total of two hours with a mid fermentation cut (3 passes through a CTC at 8 TPI) after 1 hour. After fermentation the moisture content of the tea was 72%. The fermented leaf was then pressed using a Vincent CP12 press, operating at 12rpm with a 5 bar back pressure to produce black tea juice which was separated from the leaf residue.

The juice was then frozen and transported from the tea plantation to the site at which it was further processed (as described below), at which point it was defrosted. Then it was centrifuged continuously at a rate of 150 litres/hour through an Alfa Laval BTPX205 disk-bowl centrifuge operating with a bowl speed of 8000 rpm, at 25°C.

The tea juice contained 6.8% tea solids. Two 8 ml samples were taken. 2g of dried glucose syrup polymer (C*Dry GL 01924, spray-dried, 28 DE, relative sweetness (R) of 0.08, obtained from Cargill) was added to one of the samples, bringing the total solids content to 23.9% by weight of the final composition (18.3% glucose syrup solids and 5.6% tea solids).

The tea juice samples were pasteurised, hot-filled into sachets and then pasteurised again. The sachets were stored at ambient temperature for a period of 12 months.

The appearances of the samples after storage were compared. In particular the lightness (L) and Haze values were measured with a Hunterlab Ultrascan XE colourimeter, using a CIELab Colour System, Illuminant: C, Observer Angle: 2° and Cell Size: 1 cm). Larger L values represent lighter appearance, and larger Haze values represent more haze. The results are given in Table 1. The sample which contained the glucose syrup had a substantially higher L value and substantially lower Haze value.

**Table 1**

| Sample | L | Haze |
|---|---|---|
| Black tea juice | 0.71 | 392 |
| Black tea juice + glucose syrup | 3.0 | 118 |

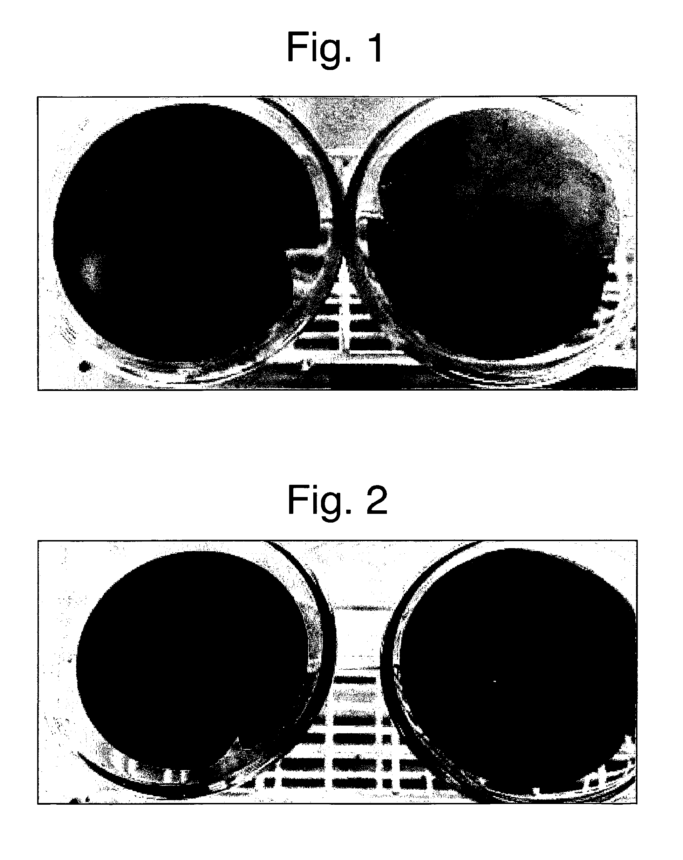

The samples were also filtered through filter paper. The filter paper was then photographed. Figure 1, left side shows the filter paper for the sample without added glucose syrup. A substantial amount of sediment remains on the filter paper. However, for the sample with added glucose syrup, shown on right, there is significantly less sediment.

Each sample was also poured into a plain white dish and inspected by eye. The sample which contained the glucose syrup had the better appearance. It was light in colour, translucent and glossier. The sample without the glucose syrup was dull and muddy looking. Inspection under an optical microscope revealed that the suspended particles in the sample containing glucose syrup were smaller in size.

Thus it is apparent that adding the glucose syrup resulted in a significant improvement in appearance, in particular the liquid was lighter with lower haze and less sediment.

### Example 2

Fresh tea leaves of *Camellia sinensis* var. *assamica* were withered to 73.4% moisture content. The withered tea leaves were coarsely cut, before being fed into a rotorvane and then through a CTC machine with the rollers set at eight teeth per inch. Immediately after cutting, the leaf was pressed using a Vincent CP12 press, operating at 12rpm with a 3 bar back pressure to produce green tea juice, which was separated from the leaf residue.

The juice was then frozen and transported from the tea plantation to the site at which it was further processed (as described below), at which point it was defrosted. Then it was centrifuged continuously at a rate of150 litres/hour through an Alfa Laval BTPX205 disk-bowl centrifuge operating with a bowl speed of 8000 rpm, at 25°C.

Two 6 ml samples of the tea juice were taken, and 2 ml of water was added to each, bringing the tea solids to 7.3%. 2g of dried glucose syrup (C*Dry GL 01924) was added to one of the samples bringing the total solids content to 24.2% by weight of the final composition (18.3% glucose syrup solids and 5.9% tea solids).

The tea juice samples were pasteurised, hot-filled into sachets and then pasteurised again. The sachets were stored at ambient temperature for a period of 12 months.

The appearances of the samples were compared after storage. In particular the lightness and haze values were measured as in Example 1. The results are given in Table 2. The sample which contained the glucose syrup has a substantially higher L value and substantially lower Haze value.

**Table 2**

| Sample | L | Haze |
|---|---|---|
| Green tea juice | 6.0 | 102 |
| Green tea juice + glucose syrup | 15.8 | 65.7 |

The samples were also filtered through filter paper. The filter paper was then photographed. Figure 2, left side, shows the filter paper for the sample without added glucose syrup. A substantial amount of sediment remains on the filter paper. However, for the sample with added glucose syrup, shown on the right, there is significantly less sediment.

Each sample was also poured into a plain white dish and inspected by eye. The sample which contained the glucose syrup had the better appearance. It was light in colour, translucent and glossier. The sample without the glucose syrup was dull and muddy looking.

Thus it is apparent that adding the glucose syrup resulted in a significant improvement in appearance, in particular the liquid was lighter in colour with less haze and less sediment.

### Example 3

Two liquid compositions were prepared containing black tea juice. Glucose syrup (C*Dry GL 01924) was added to one of them. The amounts of tea solids and glucose syrup solids by percentage weight of the final compositions are stated in Table 3. The viscosity of each sample was measured at a temperature of 20°C and a shear rate of 100 s⁻¹ using the method described above.

**Table 3**

| Sample | Tea solids | Glucose syrup | Viscosity (mPa s) |
|---|---|---|---|
| Black tea juice | 8.3% | 0 | 2.17 |
| Black tea juice + glucose syrup | 8.3% | 17% | 4.41 |

The black tea juice alone had a viscosity of 2.17 mPa·s. The black tea juice with added glucose syrup had a substantially higher viscosity of 4.41 mPa·s. Thus it is apparent that the glucose syrup increased the viscosity of the tea juice.

## Claims

1. A liquid composition comprising expressed tea juice and from 5 to 30wt % of exogenous biopolymer.

2. A liquid composition according to claim 1 wherein the exogenous biopolymer is glucose polymer having a dextrose equivalent (DE) of at least 5 DE.

3. A liquid composition according to claim 1 or claim 2 the exogenous biopolymer is glucose polymer having a dextrose equivalent (DE) of no more than 50 DE.

4. A liquid composition according to any of the preceding claims which comprises from 4 to 20wt % by weight tea solids.

5. A liquid composition according to any of the preceding claims wherein at least 50% by weight of the tea solids are provided by the expressed tea juice.

6. A liquid composition according to claim 5 wherein at least 75% by weight of the tea solids are provided by the expressed tea juice.

7. A liquid composition according to any of the preceding claims comprising from 8 to 25wt % of exogenous biopolymer.

8. A liquid composition as claimed in any one of the preceding claims which is packaged in a sealed container.

9. A beverage obtainable by diluting the liquid composition as claimed in any one of the preceding claims with an aqueous liquid.

10. A beverage as claimed in claim 9 wherein the liquid composition is diluted by a factor of 5 to 50 by weight.

11. A process for manufacturing a liquid composition as claimed in any of claims 1 to 8 comprising the steps of:
(a) expressing tea juice from fresh tea leaves; and
(b) combining the tea juice with exogenous biopolymer.

12. A process as claimed in claim 11 wherein the exogenous biopolymer is glucose polymer having a dextrose equivalent of 5 to 50 DE.

13. A process as claimed in claim 11 or claim 12 wherein the process comprises the additional step of packaging the liquid composition in a sealed container.

14. A process as claimed in any one of claims 11 to 13 wherein the liquid composition is subjected to a sanitisation step.

15. A process as claimed in any one of claims 11 to 14 wherein the tea juice is centrifuged and /or filtered before step (b)

## Patentansprüche

1. Flüssige Zusammensetzung umfassend Tee-Presssaft und von 5 bis 30 Gew.-% exogenes Biopolymer.

2. Flüssige Zusammensetzung gemäß Anspruch 1, wobei das exogene Biopolymer Glucosepolymer mit einem Dextroseäquivalent (DE) von mindestens 5 DE ist.

3. Flüssige Zusammensetzung gemäß Anspruch 1 oder 2, wobei das exogene Biopolymer ist Glucosepolymer mit einem Dextroseäquivalent (DE) von nicht mehr als 50 DE ist.

4. Flüssige Zusammensetzung gemäß irgendeinem der vorhergehenden Ansprüche, welche von 4 bis 20 Gew.-% Tee-Feststoffe umfasst.

5. Flüssige Zusammensetzung gemäß irgendeinem der vorhergehenden Ansprüche, wobei mindestens 50 Gew.-% der Tee-Feststoffe aus dem Tee-Presssaft stammen.

6. Flüssige Zusammensetzung gemäß Anspruch 5, wobei mindestens 75 Gew.-% der Tee-Feststoffe aus dem Tee-Presssaft stammen.

7. Flüssige Zusammensetzung gemäß irgendeinem der vorhergehenden Ansprüche, umfassend von 8 bis 25 Gew.-% exogenes Biopolymer.

8. Flüssige Zusammensetzung gemäß irgendeinem der vorhergehenden Ansprüche, die in einem dichten Behälter verpackt ist.

9. Getränk, erhältlich durch Verdünnen der flüssigen Zusammensetzung gemäß irgendeinem der vorhergehenden Ansprüche mit einer wässrigen Flüssigkeit.

10. Getränk gemäß Anspruch 9, wobei die flüssige Zusammensetzung gewichtsmäßig um einen Faktor von 5 bis 50 verdünnt wird.

11. Verfahren zur Herstellung einer flüssigen Zusammensetzung gemäß irgendeinem der Ansprüche 1 bis 8, umfassend die Schritte von:
(a) Herauspressen von Teesaft aus frischen Teeblättern; und
(b) Vereinigen des Teesaftes mit exogenem Biopolymer.

12. Verfahren gemäß Anspruch 11, wobei das exogene Biopolymer ein Glucosepolymer mit einem Dextrose-Äquivalent von 5 bis 50 DE ist.

13. Verfahren gemäß Anspruch 11 oder 12, wobei das Verfahren den zusätzlichen Schritt umfasst, die flüssige Zusammensetzung in einem dichten Behälter zu verpacken.

14. Verfahren gemäß irgendeinem der Ansprüche 11 bis 13, wobei die flüssige Zusammensetzung einem Schritt der Desinfektion unterworfen wird.

15. Verfahren gemäß irgendeinem der Ansprüche 11 bis 13, wobei der Teesaft vor dem Schritt (b) zentrifugiert oder gefiltert wird.

## Revendications

1. Composition liquide comprenant du jus de thé exprimé et de 5 à 30 % en poids de biopolymère exogène.

2. Composition liquide selon la revendication 1, dans laquelle le biopolymère exogène est un polymère de glucose ayant un équivalent dextrose (DE) d'au moins 5 DE.

3. Composition liquide selon la revendication 1 ou la revendication 2, le biopolymère exogène est un polymère de glucose ayant un équivalent dextrose (DE) d'au plus 50 DE.

4. Composition liquide selon l'une quelconque des revendications précédentes, laquelle comprend de 4 à 20 % en poids de matières solides de thé.

5. Composition liquide selon l'une quelconque des revendications précédentes, dans laquelle au moins 50 % en poids des matières solides de thé sont fournis par le jus de thé exprimé.

6. Composition liquide selon la revendication 5, dans laquelle au moins 75 % en poids des matières solides de thé sont fournis par le jus de thé exprimé.

7. Composition liquide selon l'une quelconque des revendications précédentes comprenant de 8 à 25 % en poids de biopolymère exogène.

8. Composition liquide selon l'une quelconque des revendications précédentes, laquelle est emballée dans un récipient scellé.

9. Boisson pouvant être obtenue par dilution de la composition liquide selon l'une quelconque des revendications précédentes avec un liquide aqueux.

10. Boisson selon la revendication 9, dans laquelle la composition liquide est diluée par un facteur de 5 à 50 en poids.

11. Procédé de fabrication d'une composition liquide selon l'une quelconque des revendications 1 à 8 comprenant les étapes :
(a) d'expression de jus de thé à partir de feuilles de thé fraîches ; et
(b) de combinaison du jus de thé avec un biopolymère exogène.

12. Procédé selon la revendication 11, dans lequel le biopolymère exogène est un polymère de glucose ayant un équivalent dextrose de 5 à 50 DE.

13. Procédé selon la revendication 11 ou la revendication 12, dans lequel le procédé comprend l'étape supplémentaire d'emballage de la composition liquide dans un récipient scellé.

14. Procédé selon l'une quelconque des revendications 11 à 13, dans lequel la composition liquide est soumise à une étape de désinfection.

15. Procédé selon l'une quelconque des revendications 11 à 14, dans lequel le jus de thé est centrifugé et/ou filtré avant l'étape (b).
